(19)

Europäisches
Patentamt
European
Patent Office
Office européen
des brevets

(11) **EP 3 772 524 A1**

(12) **EUROPEAN PATENT APPLICATION**

(43) Date of publication:
**10.02.2021 Bulletin 2021/06**

(51) Int Cl.:
**C08K 3/26** *(2006.01)*

(21) Application number: **19290069.4**

(22) Date of filing: **09.08.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ImerTech SAS
75015 Paris (FR)**

(72) Inventor: **The designation of the inventor has not
yet been filed**

(74) Representative: **Haseltine Lake Kempner LLP
Redcliff Quay
120 Redcliff Street
Bristol BS1 6HU (GB)**

(54) **PRECIPITATED CALCIUM CARBONATE FOR ODOUR REDUCTION**

(57)    The present disclosure relates to a filled composition comprising a substrate, functional filler, and an inorganic additive including a precipitated calcium carbonate for reducing the odour of the filled composition, and related uses, methods and articles of manufacture; the precipitated calcium carbonate having a specific surface area greater than about 18 $m^2/g$, an inter-particle pore volume of at least about 0.05 $cm^3/g$, an intra-particle pore volume of less than about 0.1 cm3/g, and a Dp of less than or equal to about 100 nm.

EP 3 772 524 A1

**Description**

FIELD OF THE INVENTION

Embodiments of the present disclosure relate to a filled composition comprising a substrate, functional filler, and an inorganic additive for reducing the odour of the filled composition, wherein the inorganic additive is present in an amount sufficient to reduce the odour of the filled composition absent the inorganic additive, and to related uses, methods and articles of manufacture.

BACKGROUND OF THE INVENTION

Polymers, such as polypropylene, polyethylene, polystyrene, polyvinyl chloride, polyisoprene, polybutadiene, polyisobutylene, polyurethane, polyacetal, polyamides, and polyesters, silane terminated polymers, silicones, polysulfides, epoxy, and acrylics, are widely used in consumer and industrial applications, and in many instances there is a desire or requirement to control odour levels. For example, filled polymers such as talc-filled polypropylene, are widely used in automotive or other industrial applications. For interior and under the hood automotive applications, odour levels of the final parts are required to meet specifications given by the car manufacturers. In interior/under the hood automotive parts, mineral fillers such as talc or fibers such as glass or natural fibers, are often used in polymers such as polypropylene for reinforcement, thermal resistance and dimensional stability. However, these fillers can also lead to an increase in odour. Further, UV exposure through sunlight may affect materials used in automotive parts, for example, through polymer degradation which can adversely affect the colour, shape and/or mechanical properties (e.g., tensile strength) of the materials used, and can increase odour levels. Thus, there is ongoing need to develop new and improved filled compositions for use in automotive applications and the like.

SUMMARY OF THE DISCLOSURE

In accordance with a first aspect, there is provided a filled composition including a substrate and an inorganic additive for reducing the odour of the filled composition, wherein the inorganic additive comprises a precipitated calcium carbonate having a specific surface area greater than about 18 $m^2/g$, an inter-particle pore volume of at least about 0.05 $cm^3/g$, an intra-particle pore volume of less than about 0.1 $cm^3/g$, and a Dp (elementary particle size) of less than or equal to about 100 nm.

In accordance with a second aspect, the filled composition can further include a functional filler selected from natural fibers, a glass fiber, a mineral filler other than the inorganic additive, and combinations thereof; optionally, wherein the mineral filler is selected from diatomaceous earth, ground calcium carbonate, kaolin, talc, HAR talc, micronized talc, wollastonite, and combinations thereof.

In accordance with a third aspect, the functional filler is surface treated, optionally wherein the surface treatment includes or is an organic moiety, for example a polyalkylene glycol, for example, polyethylene glycol, or alkyl sulfonate, for example, a C10-C20 alkyl sulfonate, or a C14-C17 alkyl sulfonate.

In accordance with a fourth aspect, there is provided a use of such inorganic additive for reducing the odour of a composition comprising a substrate.

In accordance with a fifth aspect, there is provided an article formed from the filled composition.

In accordance with a sixth aspect, there is provided a method of reducing the odour of a filled composition comprising a substrate and mineral filler, comprising adding to the filled composition such inorganic additive for reducing the odour of the filled composition.

In accordance with a seventh aspect, there is provided a method of making a filled composition, the method comprising combining a substrate, a functional filler and a sufficient amount of an inorganic additive for reducing the odour of the filled composition such that the odour of the filled composition comprising the inorganic additive is reduced compared to the filled composition absent the inorganic additive.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

DETAILED DESCRIPTION

It has surprisingly been found that improvements in the odour of a composition, for example, a mineral-filled polymer, is achievable by incorporation of a relatively low amount of an inorganic additive (that is, an inorganic additive other than the mineral filler) comprising precipitated calcium carbonate. The precipitated calcium carbonate can have a specific surface area greater than about 18 or greater than about 24 or greater than about 30 m$^2$/g, an inter-particle pore volume of at least about 0.05 or at least about 0.08 or at least about 0.1 cm$^3$/g, an intra-particle pore volume of less than about 0.1 or less than about 0.08 or less than about 0.05 cm$^3$/g, and a Dp (elementary particle size) of less than or equal to about 100 nm or less than or equal to about 80 nm or less than or equal to about 60 nm or from about 10 nm to about 60 nm or from about 30 nm to about 60 nm. This, in turn, may enable greater use of relatively inexpensive mineral fillers in filled compositions, for example, filled polymer compositions, without adversely affecting other properties, for example, the mechanical performance, of the filled composition.

Test Methods

The odour of the (optionally filled) compositions described herein, for example, polymer compositions, or articles formed therefrom may be determined by any suitable method. In certain embodiments, odour is determined in accordance with VDA 270, for example, VDA 270 (variant C3). In accordance with Standard VDA 270
Samples are placed in hermectic bags (0.3 g/l, equating to 0.3 g of sample in 9 litres of 10 air), then submitted to thermal cycle at about 80 °C (variant C3). Odour evaluation is performed by 5 trained persons. Each person rates the odour according to the following scale:

1 - not perceptible

2 - perceptible, not disturbing

3 - clearly perceptible, but not disturbing

4 - disturbing

5 - strongly disturbing

6 - not acceptable

The 5 ratings for each sample are then averaged to provide the VDA 270 test result. Suitable kits for testing odour according to VDA 270 are available, for example, from companies such as Odournet GmbH.
Further, in certain embodiments, improvements in a mechanical property (e.g., stiffness) of the filled composition may be simultaneously achievable by incorporation of the inorganic additive. In certain embodiments, the mechanical property is the dimensional stability or structural integrity of the filled composition, as may be determined by any suitable measurement method. In certain embodiments, the mechanical property is stiffness. In other embodiments, for example, embodiments in which the filled composition is a filled polymer composition, by "stiffness" is meant the relative flexibility of the filled composition. Stiffness in this sense is a desirable property for automotive interior parts and components. In such embodiments, stiffness is directly linked to flexural modulus. The higher the flexural modulus, the stiffer the material. The lower the flexural modulus, the more flexible it is. The stiffness of the filled polymer composition or article formed therefrom may be determined by any suitable method. In certain embodiments, the stiffness of the filled polymer composition or article formed therefrom is determined by measuring its flexural modulus in accordance with ISO 178.
Particle size dp is determined by permeability measured according to a method derived from BS 4359-2. The basis of this method is the measurement of the air permeability of a pellet, which is analogous to the "Blaine" or the "Lea & Nurse method". The calculation of the dp derives from the Carman & Malherbe formula:

$$q \times L = \frac{1.05\varepsilon^2}{(1-\varepsilon)^2}ds^2 + \frac{2.88\varepsilon^2}{1-\varepsilon}ds$$

$$\varepsilon = 1 - \frac{W}{A \times L \times D}$$

It can be shown that the mean particle diameter ds which is determined according to the Carman & Malherbe formula is not absolutely independent from the porosity of the pellet. Consequently, a correction was brought considering the reference porosity $\varepsilon$ = 0.45 and the dp was calculated according to the formula:

$$dp = ds \times e^{-3.2(\varepsilon - 0,45)}$$

Definitions and unities are as follows:

q = volumetric rate of air flow passed through the PCC pellet ($cm^3$/g),

$\varepsilon$ = porosity,

W = weight of PCC,

L = thickness of the pellet,

D = density of PCC (g/$cm^3$),

A = area of the cross section of the pellet ($cm^2$),

ds = mean particle diameter according to Carman & Malherbe ($\mu$m), and

dp = mean particle diameter ($\mu$m).

As used herein, "specific surface area" means the area of the surface of the inorganic additive with respect to unit mass, determined according to the BET method by the quantity of argon adsorbed on the surface of said particles so to as to form a monomolecular layer completely covering said surface (measurement according to the BET method, AFNOR standard X11-621 and 622 or ISO 9277).

Intra-particle pore volume represents the pore volume contained within the individual particles, and cannot be measured for individual precipitated calcium carbonate particles due to their non-porous nature. Inter-particle pore volume represents the pore volume in the interstitial spaces between the particles, and is determined by nitrogen adsorption, in accordance with the following method. Pore size properties (e.g. total pore volume; which for precipitated calcium carbonate particles is also the inter-particle pore volume; and average pore size) are measured using the cylindrical shape assumption (4V/A), which is part of the BJH (Barrett-Joyner-Halenda) model. The BJH model is derived from the same $N_2$ absorption isotherm that is used for BET specific surface area calculation (measurement according to the BET method, AFNOR standard X11-621 and 622 or ISO 9277). The BJH model is described in Barrett et al., Am. Chem. Soc., 73 (1951), pages 373 to 380, the contents of which are incorporated herein by reference. A Micromeritics TRISTAR 3000 and Micromeritics VACPREP 061 may, for example, be used. The samples may, for example, be degassed in an oven overnight at 105°C, followed by 180°C for 30 minutes under nitrogen flow and cooling for 30 minutes under nitrogen flow. The isotherm may, for example, be measured for relative pressures P/$P_0$ ranging from 0.05 to 0.98. Average pore size refers to pore diameter. Porous volume is cumulative and obtained by BJH on the desorption branch for pore sizes between 1.7 and 50 nm.

In accordance with any of the embodiments of the present disclosure described herein, the inorganic additive can be present in an amount sufficient to reduce the odour of the filled composition by:

a. at least about 5% or at least about 8% or at least about 10 % according to the ISO 13725 odour test; OR

b. at least about 0.5 or at least about 0.7 or at least about 1 units according to the VDA 270 odour test.OR

c. at least about 0.4 or at least about 0.6 or at least about 0.8 units according to the Renault Champ des odeurs® test

Also, the inorganic additive can be present in an amount of from about 0.5 to about 10 wt%, or from about 1 to about 6 wt%, or from about 1 to about 2 wt%, based on the total weight of the filled composition.

In accordance with any of the embodiments of the present disclosure described herein, the filled composition can further comprise a functional filler selected from natural fibers, a glass fiber, a mineral filler other than the inorganic additive, and combinations thereof; optionally, wherein the mineral filler is selected from diatomaceous earth, ground calcium carbonate, kaolin, talc, HAR talc, micronized talc, wollastonite, and combinations thereof.

In accordance with any of the embodiments of the present disclosure described herein, the functional filler can be present in the filled composition in an amount of at least about 5 wt%, or at least about 10 wt%, or from about 5 wt% to about 80 wt%, or from about 10 wt% to about 80 wt%, based on the total weight of the filled composition. Also, the functional filler can be surface treated, optionally wherein the surface treatment comprises or is an organic moiety, for example a polyalkylene glycol, for example, polyethylene glycol, or alkyl sulfonate, for example, a C10-C20 alkyl sulfonate, or a C14-C17 alkyl sulfonate.

In accordance with any of the embodiments of the present disclosure described herein, the substrate is present in the filled composition in an amount of at least about 20 wt% or at least about 25 wt% or at least about 30 wt% or at least about 50 wt%, or from about 20 wt% to about 95 wt%, or from about 70 wt% to about 90 wt%, based on the total weight of the filled composition. The substrate can be a polymer, a blend of polymers, paint or paint base, paper, paper board, or composite; optionally wherein the polymer comprises one or more of polypropylene, polyethylene, polystyrene, polyvinyl chloride, polyisoprene, polybutadiene, polyisobutylene, polyurethane, polyacetal, polyamides, polyesters, silane terminated polymers, silicones, polysulfides, epoxy, and acrylics; and optionally wherein the blend of polymers includes an elastomer. The polymer(s) can be virgin, recycled, or mixtures thereof.

In accordance with any of the embodiments of the present disclosure described herein, the inorganic additive as described herein can be used for reducing the odour of a composition comprising a substrate, also as described herein. Also, the inorganic additive can be used for reducing odour or VOC emissions from a filled composition comprising a substrate and functional filler, wherein the inorganic additive and/or substrate and/or functional filler are as described herein.

In accordance with any of the embodiments of the present disclosure described herein, a method of reducing the odour of a filled composition comprising a substrate as described herein and a mineral filler, comprising adding to the filled composition an inorganic additive as described herein for reducing the odour of the filled composition.

In accordance with any of the embodiments of the present disclosure described herein, a method of making a filled composition can comprise combining a substrate, a functional filler and a sufficient amount of an inorganic additive, each as described herein, for reducing the odour of the filled composition such that the odour of the filled composition comprising the inorganic additive is reduced compared to the filled composition absent the inorganic additive. Optionally, wherein the method can include compounding the substrate, functional filler, and inorganic additive, optionally along with processing aids. An article can be formed from the filled composition as described herein and/or by the above described method further comprising forming, for example, by extrusion or moulding, an article from the filled composition. The article can be an automotive interior article, for example, dashboard, interior trim, or interior body panel.

For the avoidance of doubt, the present application is directed to subject-matter described in the following numbered paragraphs:

1. A filled composition comprising a substrate and an inorganic additive for reducing the odour of the filled composition, wherein the inorganic additive comprises a precipitated calcium carbonate having a specific surface area greater than about 18 $m^2$/g, an inter-particle pore volume of at least about 0.05 $cm^3$/g, an intra-particle pore volume of less than about 0.1 cm3/g, and a Dp of less than or equal to about 100 nm.

2. The filled composition according to numbered paragraph 1, wherein the inorganic additive is present in an amount of from about 0.5 to about 10 wt%, or from about 1 to about 6 wt%, or from about 1 to about 2 wt%, based on the total weight of the filled composition.

3. The filled composition according to numbered paragraphs 1 or 2, wherein the precipitated calcium carbonate has a Dp ranging between about 10 and about 60 nm.

4. The filled composition according to any preceding numbered paragraph, wherein the inorganic additive is present in an amount sufficient to reduce the odour of the filled composition by:

   a. at least about 5% or at least about 8% or at least about 10 % according to the ISO 13725 odour test; OR

   b. at least about 0.5 or at least about 0.7 or at least about 1 units according to the VDA 270 odour test. OR

   c. at least about 0.4 or at least about 0.6 or at least about 0.8 units according to the Renault Champ des odeurs® test.

5. The filled composition according to numbered paragraphs 1 or 2, further comprising a functional filler selected from natural fibers, a glass fiber, a mineral filler other than the inorganic additive, and combinations thereof; optionally, wherein the mineral filler is selected from diatomaceous earth, ground calcium carbonate, kaolin, talc, HAR talc, micronized talc, wollastonite, and combinations thereof.

6. The filled composition according to numbered paragraph 5, wherein the functional filler is present in an amount of at least about 5 wt%, or at least about 10 wt%, or from about 5 wt% to about 80 wt%, or from about 10 wt% to about 80 wt%, based on the total weight of the filled composition.

7. The filled composition according to numbered paragraphs 5 or 6, wherein the functional filler is surface treated, optionally wherein the surface treatment comprises or is an organic moiety, for example a polyalkylene glycol, for example, polyethylene glycol, or alkyl sulfonate, for example, a C10-C20 alkyl sulfonate, or a C14-C17 alkyl sulfonate.

8. The filled composition according to any preceding numbered paragraph, wherein the substrate is present in an amount of at least about 20 wt% or about 25 wt% or about 30 wt% or about 50 wt%, based on the total weight of the filled composition.

9. The filled composition according to any preceding numbered paragraph, wherein the substrate is a polymer, a blend of polymers, paint or paint base, paper, paper board, or composite; optionally wherein the polymer comprises one or more of polypropylene, polyethylene, polystyrene, polyvinyl chloride, polyisoprene, polybutadiene, polyisobutylene, polyurethane, polyacetal, polyamides, polyesters, silane terminated polymers, silicones, polysulfides, epoxy, and acrylics; and optionally wherein the blend of polymers includes an elastomer.

10. Use of an inorganic additive for reducing the odour of a composition comprising a substrate, wherein the inorganic additive and/or substrate are as defined in any one of numbered paragraphs 1 - 9.

11. A method of reducing the odour of a filled composition comprising a substrate and mineral filler, comprising adding to the filled composition an inorganic additive for reducing the odour of the filled composition as defined in any one of numbered paragraphs 1 -10.

12. Use of an inorganic additive for reducing emissions from a filled composition comprising a substrate and functional filler, wherein the inorganic additive and/or substrate are as defined in any one of numbered paragraphs 1 - 11, and wherein the functional filler is as defined in any one of numbered paragraphs 5 - 7.

13. A method of making a filled composition, the method comprising combining a substrate, a functional filler and a sufficient amount of an inorganic additive for reducing the odour of the filled composition such that the odour of the filled composition comprising the inorganic additive is reduced compared to the filled composition absent the inorganic additive, wherein the inorganic additive and/or substrate are as defined in any one of numbered paragraphs 1 - 11, and wherein the functional filler is as defined in any one of numbered paragraphs 5 - 7; optionally, wherein the method includes compounding the substrate, functional filler, and inorganic additive, optionally along with processing aids.

14. The method according to any one of numbered paragraphs 11 or 13, further comprising forming, for example, by extrusion or moulding, an article from the filled composition.

15. An article formed from the filled composition according to any one of numbered paragraphs 1 - 14 or obtainable by the method of any one of numbered paragraphs 11 or 13-14.

16. The article according to numbered paragraph 15, wherein the article is an automotive interior article, for example, dashboard, interior trim, or interior body panel.

EXAMPLES

Formulation Preparation

A precipitated calcium carbonate sample (PCC-1) having the following physical characteristics was used in the testing:
PCC-1 is a porous PCC having a BET (ISO 9277) specific surface area of about 32 $m^2$/g. PCC 1 has an average pore volume of about 0.05 $cm^3$/g as measured by BJH, and has a Dp between 50 and 60 nm as measured by a method derived from BS 4359-2, as described in this description.
A Formulation 1 was prepared including:

78 wt% polypropylene homopolymer ("PP");

20 wt% semi-retted hemp (retting is a process that enables separation of the hemp fibre from the stem. It is achieved by a thermal treatment at high temperature in a controlled atmosphere); and

2 wt% of PCC-1

A Comparative Formulation was prepared including:

80 wt% polypropylene homopolymer ("PP"); and

20 wt% semi-retted hemp.

The Formulation 1 was prepared as follows:
A masterbatch presenting a concentration of additives that is above the required one is prepared.

• It is then diluted with PP to obtain the right additive concentration.
• Extrusion is then performed to obtain granules

Odour Control testing

The Formulation 1 is targeted for use in automotive applications, so all the protocols that were used are mostly for the automotive industry.
The measurements are performed according to the regulation ISO 13725 and involves:

• Right after production, samples of Formulation 1, and the Comparative Formulation were stored in an aluminised PE bag;

• Samples were measured less than 10 days after production (The regulation mentions that they must be less than 6 weeks old);

• 200 to 300 g of granules were put in a climatic chamber for tests, allowing the amount of sample / volume of air ratio to be controlled;

• Samples were then conditioned for 2 hours at 70 °C, and a given volume of air was then collected and the odour of such air evaluated by a panel of people;

• The odour intensity was estimated by comparison to a butanol reference. The uncertainty of the data is estimated to be around 40 % due to changes of perception in the human nose.

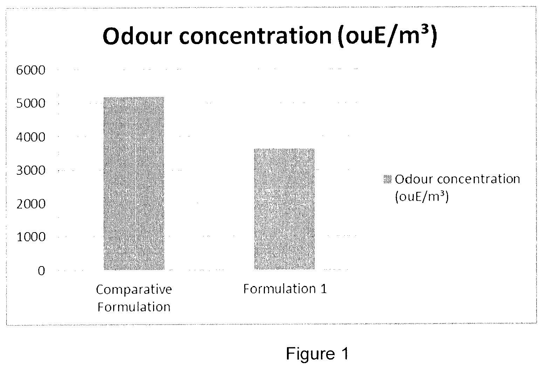

Figure 1 shows the obtained results.
Another odour test was performed according to the Renault method - Champ des odeurs®
In this method:

A panel of 5 people individually evaluate the odour;

The intensity is compared to a butanol reference;

An intensity can be attributed:

○ The scale goes from 0 to 5.

○ The upper acceptable limit is 2.5.

○ The odour intensity is also described using various descriptors such as "woody", "moldy/earthy", etc.In case of discrepancy in the results, the following protocol is applied:

It must be noted that all the members of the panel can see the answers of the others; and

If divergent results are obtained, samples are re-evaluated.

The obtained results according to Renault method from the 5 people are averaged, and the average values are presented in Table 1 below.

Table 1

|  | Comparative Formulation | Formulation 1 |
|---|---|---|
| Fatty | 1.8 | 1.4 |
| Woody | 1.1 | 1.3 |
| Moldy / earthy | 0 | 0.4 |
| Roasted | 2.6 | 2.2 |
| Global intensity | 2.7 | 2.3 |

From the data shown in Table 1, it can be seen that the Comparative Formulation including only PP and hemp does not meet the requirements in terms of odour (global intensity above 2.5). It can also be seen that Formulation 1 including PP, hemp and PCC-1 passed the odour test.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

**Claims**

1. A filled composition comprising a substrate and an inorganic additive for reducing the odour of the filled composition, wherein the inorganic additive comprises a precipitated calcium carbonate having a specific surface area greater than about 18 $m^2$/g, an inter-particle pore volume of at least about 0.05 $cm^3$/g, an intra-particle pore volume of less than about 0.1 cm3/g, and a Dp of less than or equal to about 100 nm.

2. The filled composition according to claim 1, wherein the inorganic additive is present in an amount of from about 0.5 to about 10 wt%, or from about 1 to about 6 wt%, or from about 1 to about 2 wt%, based on the total weight of the filled composition.

3. The filled composition according to claim 1 or 2, wherein the precipitated calcium carbonate has a Dp ranging between about 10 and about 60 nm.

4. The filled composition according to any preceding claim, wherein the inorganic additive is present in an amount sufficient to reduce the odour of the filled composition by:

   a. at least about 5% or at least about 8% or at least about 10 % according to the ISO 13725odour test; OR
   b. at least about 0.5 or at least about 0.7 or at least about 1 units according to the VDA 270 odour test.OR
   c. at least about 0.4 or at least about 0.6 or at least about 0.8 units according to the Renault Champ des odeurs® test.

5. The filled composition according to claim 1 or 2, further comprising a functional filler selected from natural fibers, a glass fiber, a mineral filler other than the inorganic additive, and combinations thereof; optionally, wherein the mineral filler is selected from diatomaceous earth, ground calcium carbonate, kaolin, talc, HAR talc, micronized talc, wollastonite, and combinations thereof.

6. The filled composition according to claim 5, wherein the functional filler is present in an amount of at least about 5 wt%, or at least about 10 wt%, or from about 5 wt% to about 80 wt%, or from about 10 wt% to about 80 wt%, based on the total weight of the filled composition.

7. The filled composition according to claim 5 or 6, wherein the functional filler is surface treated, optionally wherein the surface treatment comprises or is an organic moiety, for example a polyalkylene glycol, for example, polyethylene glycol, or alkyl sulfonate, for example, a C10-C20 alkyl sulfonate, or a C14-C17 alkyl sulfonate.

8. The filled composition according to any preceding claim, wherein the substrate is present in an amount of at least about 20 wt% or about 25 wt% or about 30 wt% or about 50 wt%, based on the total weight of the filled composition.

9. The filled composition according to any preceding claim, wherein the substrate is a polymer, a blend of polymers, paint or paint base, paper, paper board, or composite; optionally wherein the polymer comprises one or more of polypropylene, polyethylene, polystyrene, polyvinyl chloride, polyisoprene, polybutadiene, polyisobutylene, polyurethane, polyacetal, polyamides, polyesters, silane terminated polymers, silicones, polysulfides, epoxy, and acrylics; and optionally wherein the blend of polymers includes an elastomer.

10. Use of an inorganic additive for reducing the odour of a composition comprising a substrate, wherein the inorganic additive and/or substrate are as defined in any one of claims 1 - 9.

11. A method of reducing the odour of a filled composition comprising a substrate and mineral filler, comprising adding to the filled composition an inorganic additive for reducing the odour of the filled composition as defined in any one of claims 1 -10.

12. Use of an inorganic additive for reducing emissions from a filled composition comprising a substrate and functional filler, wherein the inorganic additive and/or substrate are as defined in any one of claims 1 - 11, and wherein the functional filler is as defined in any one of claims 5 - 7.

13. A method of making a filled composition, the method comprising combining a substrate, a functional filler and a sufficient amount of an inorganic additive for reducing the odour of the filled composition such that the odour of the filled composition comprising the inorganic additive is reduced compared to the filled composition absent the inorganic additive, wherein the inorganic additive and/or substrate are as defined in any one of claims 1 - 11, and wherein the functional filler is as defined in any one of claims 5 - 7; optionally, wherein the method includes compounding the substrate, functional filler, and inorganic additive, optionally along with processing aids.

14. The method according to any one of claims 11 or 13, further comprising forming, for example, by extrusion or moulding, an article from the filled composition.

15. An article formed from the filled composition according to any one of claims 1 - 14 or obtainable by the method of any one of claims 11 or 13-14, optionally, wherein the article is an automotive interior article, for example, dashboard, interior trim, or interior body panel.

Figure 1

Europäisches
Patentamt

European
Patent Office

Office européen
des brevets

# EUROPEAN SEARCH REPORT

**Application Number**

EP 19 29 0069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/189346 A1 (IMERYS MINERALS LTD [GB]) 18 October 2018 (2018-10-18) * examples * * claims * ----- | 1-13 | INV. C08K3/26 |
| A | US 2017/224862 A1 (OHR STEFFEN [CH] ET AL) 10 August 2017 (2017-08-10) * claims * ----- | 1-13 | |
| A | EP 3 275 946 A1 (OMYA INT AG [CH]) 31 January 2018 (2018-01-31) * claims 1,2,25,31-34 * ----- | 1-13 | |

| | |
|---|---|
| | **TECHNICAL FIELDS SEARCHED (IPC)** |
| | C08K |

The present search report has been drawn up for all claims

| Place of search | Date of completion of the search | Examiner |
|---|---|---|
| Munich | 30 January 2020 | Russell, Graham |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

# EP 3 772 524 A1

## ANNEX TO THE EUROPEAN SEARCH REPORT
## ON EUROPEAN PATENT APPLICATION NO.

EP 19 29 0069

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2020

| Patent document cited in search report | | Publication date | Patent family member(s) | | Publication date |
|---|---|---|---|---|---|
| WO 2018189346 | A1 | 18-10-2018 | EP | 3609954 A1 | 19-02-2020 |
| | | | KR | 20190135048 A | 05-12-2019 |
| | | | WO | 2018189346 A1 | 18-10-2018 |
| US 2017224862 | A1 | 10-08-2017 | AR | 103108 A1 | 19-04-2017 |
| | | | AU | 2015276210 A1 | 22-12-2016 |
| | | | BR | 112016029621 A2 | 22-08-2017 |
| | | | CA | 2951344 A1 | 23-12-2015 |
| | | | CL | 2016003197 A1 | 09-06-2017 |
| | | | CN | 106413764 A | 15-02-2017 |
| | | | DK | 2957301 T3 | 03-07-2017 |
| | | | EP | 2957301 A1 | 23-12-2015 |
| | | | EP | 3157583 A1 | 26-04-2017 |
| | | | ES | 2629176 T3 | 07-08-2017 |
| | | | HR | P20170990 T1 | 22-09-2017 |
| | | | HU | E034663 T2 | 28-02-2018 |
| | | | JP | 6474839 B2 | 27-02-2019 |
| | | | JP | 2017528172 A | 28-09-2017 |
| | | | KR | 20170023109 A | 02-03-2017 |
| | | | MX | 355855 B | 03-05-2018 |
| | | | PL | 2957301 T3 | 29-09-2017 |
| | | | PT | 2957301 T | 06-07-2017 |
| | | | RU | 2652973 C1 | 03-05-2018 |
| | | | SG | 11201610279Y A | 27-01-2017 |
| | | | TW | 201603839 A | 01-02-2016 |
| | | | US | 2017224862 A1 | 10-08-2017 |
| | | | UY | 36185 A | 29-01-2016 |
| | | | WO | 2015193299 A1 | 23-12-2015 |
| EP 3275946 | A1 | 31-01-2018 | CN | 109757106 A | 14-05-2019 |
| | | | EP | 3275946 A1 | 31-01-2018 |
| | | | EP | 3487938 A1 | 29-05-2019 |
| | | | JP | 2019531242 A | 31-10-2019 |
| | | | WO | 2018019692 A1 | 01-02-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BARRETT et al.** *Am. Chem. Soc.,* 1951, vol. 73, 373-380